# EUROPEAN PATENT APPLICATION

(11) **EP 4 797 090 A1**
(43) Date of publication of application: **26.08.2026**
(21) Application number: 26158615.0
(22) Date of filing: 13.02.2026
(51) Int. Cl.: G06F 9/445, G06F 9/451, G06F 9/455

(54) **ENABLING DISPLAYS FROM MULTIPLE CLIENT DEVICES TO INTERACT WITH A VIRTUAL MACHINE**

(30) Priority: 21.02.2025 US 202519059644
(71) Applicant: Microsoft Technology Licensing, LLC, Redmond, WA 98052 (US)
(72) Inventor: HAMMOND, Andrew Charles, Redmond, 98052 (US); GACAD-SIOSON, Angelo Alberto Vergel de Dios, Redmond, 98052 (US); MARCHESE, Jordan Emil, Redmond, 98052 (US); PATNAIK, Sandeep, Redmond, 98052 (US)
(74) Representative: CMS Cameron McKenna Nabarro Olswang LLP

(57) **Abstract**

The technology described herein enables a remote desktop application to provide visual content to displays associated with multiple client devices, not just the primary client device serving as the active endpoint. Remote desktop software allows a user to access and control a computer or server from a remote location. Conventionally, a remote desktop session is limited to display of content through displays communicatively coupled to the primary client. The technology described herein expands display options to include displays associated with a user's other client devices that have a remote desktop application installed. For example, a user may access a virtual machine on a primary client but use the screen on a secondary client to view additional content provided by the virtual machine.

## Description

### BACKGROUND

Modern operating systems are able to display content on multiple external monitors. When an operating system identifies an external monitor, it may follow several steps to ensure proper detection and configuration. When a user connects an external monitor to a computer via HDMI, DisplayPort, VGA, or USB-C, the operating system detects the new hardware connection. This is often facilitated by the graphics processing unit (GPU) and the monitor's firmware. The monitor sends its EDID (Extended Display Identification Data) to the computer. EDID is a standardized data format that contains information about the monitor's capabilities, such as its manufacturer, model, supported resolutions, refresh rates, and color profiles. The operating system communicates with the graphics driver to interpret the EDID data. The driver then configures the display settings based on the monitor's capabilities and the system's current configuration. The operating system adjusts the display settings, such as resolution, orientation, and scaling, to match the new monitor. Users can further customize these settings through the display settings menu.

Users rely on computing environments with applications and services to accomplish computing tasks. Distributed computing systems and/or cloud computing platforms host and support different types of applications and services in managed computing environments. A cloud computing platform may implement a cloud access management system that provides access management functionality for different types of cloud computing offerings. For example, a cloud access management system can provide clients access to remote clients - including managed desktop services that include virtual machines assigned to individual users as virtual desktop devices configured with productivity, security, and collaboration tools. The remote desktop's visual output (e.g., user interface) is typically available to monitors directly connected to an active client endpoint.

### SUMMARY

The technology described herein enables a remote desktop application to provide visual content to displays associated with multiple client devices, not just the primary client device serving as the active endpoint. Client devices may include, but are not limited to, PCs, phones, tablets, virtual reality headsets, and/or augmented reality glasses. Remote desktop software allows a user to access and control a computer or server from a remote location, described herein as a local client, or simply client. A primary client may be connected to one or more displays that may be used to display content provided by a virtual machine. Conventionally, a remote desktop session is limited to display of content through displays communicatively coupled to the primary client.

The technology described herein expands display options to include displays associated with a user's other client devices. For example, a user may access a virtual machine on a primary client but use the screen on a secondary client to view additional content provided by the virtual machine. Both the primary client and the secondary client are running remote desktop software, such as a remote desktop application. The remote desktop software works with a remote agent on the virtual machine to identify displays available to the user across the user's devices and enables selection of those displays. The selection may initially occur through the primary client.

The technology described herein enables use of two or more client devices. For the sake of simplicity, the technology will be described in the context of a primary client and a secondary client. The primary and secondary client(s) may have different connection types with the remote virtual machine. In some examples, the connection types include a full connection, a graphics connection, and a background connection. The full connection is established after authentication and is enabled to handle graphical operations and data, such as the transmission of graphical-user-interface content from the virtual machine to the primary client. When a full connection is established, a background connection may also be established. The background connection may persist after the full connection ends. The full connection may end when the user ends an active session. The persistence of the background connection allows the technology described herein to determine whether a display associated with a client device that is not in an active session is available. The background connection is a lightweight connection that may also be described herein as a pre-connect connection or a non-final connection. In some examples, the primary device has a full connection with the virtual machine, while the secondary client may have a background connection, at least, initially. If content is to be provided to the secondary device, then a full connection or graphics connection with the secondary client device may be formed. A graphics connection allows graphics information to be communicated from the virtual machine to the client but may lack some functionality provided by the full connection. For example, the graphics connection may not include a channel for input to be communicated from the secondary client to the virtual machine.

The technology described herein may limit the selection of secondary clients to devices located within a threshold physical distance from the primary client. The use of a distance threshold can provide extra security to prevent the content from being displayed through a secondary client that is not visible to the user of the primary client. This type of accidental display may result in an inadvertent communication of content to other users. In other aspects, a warning or notice is provided when the user selects a device that is outside of the distance threshold. The user may then be asked to affirmatively indicate that the selected device is correct.

In addition to different connection types, the remote desktop applications on the primary and secondary clients may operate in different modes. In some examples, the modes include a graphics mode and a non-graphics mode. In graphics mode, the remote desktop is enabled to output graphics content provided by the virtual machine, such as via a user interface. In non-graphics mode, graphical output is not processed. In non-graphics mode, various state communications may occur related to display availability and characteristics without a graphical interface being output. In some examples, the primary device runs in graphics mode, while the secondary client may run in non-graphics mode until display content is provided to the secondary client.

The virtual machine performs display discovery and then gives the user the ability to use discovered displays. Initially, the virtual machine may use background connections to interrogate one or more secondary clients associated with the user's account. The interrogation can result in a list of displays associated with the one or more secondary client devices. This list of available displays may be provided to the user through a display selection interface on a display connected to the primary client. The technology described herein presents a display interface to the user through the primary client showing one or more displays associated with a secondary client. Upon selection of a display through the display interface, the user may begin seeing content from the virtual machine using the selected display associated with the secondary client.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The technology described herein is described in detail below with reference to the attached drawing figures, wherein:
FIG. 1 is a block diagram of an example cloud access management system through which displays associated with multiple clients may receive content from a virtual machine, in accordance with aspects of the technology described herein;
FIG. 2 is a block diagram of an example cloud access management system showing the addition of a second display associated with a secondary client to a virtual machine session, in accordance with aspects of the technology described herein;
FIG. 3 provides a first method of providing connection management to enable display sharing between clients, in accordance with aspects of the technology described herein;
FIG. 4 provides a second method of providing connection management to enable display sharing between clients, in accordance with aspects of the technology described herein;
FIG. 5 provides a third method of providing connection management to enable display sharing between clients, in accordance with aspects of the technology described herein;
FIG. 6 provides a block diagram of an example cloud access management system suitable for use in implementing aspects of the technology described herein;
FIG. 7 provides a block diagram of an example distributed computing environment suitable for use in implementing aspects of the technology described herein; and
FIG. 8 provides a block diagram of an example computing environment suitable for use in implementing aspects of the technology described herein.

### DETAILED DESCRIPTION

### OVERVIEW

The technology described herein enables a remote desktop application to provide visual content to displays associated with multiple client devices, not just the primary client device serving as the active endpoint. Client devices may include, but are not limited to, PCs, phones, tablets, virtual reality headsets, and/or augmented reality glasses. Remote desktop software allows a user to access and control a computer or server from a remote location, described herein as a local client, or simply client. A primary client may be connected to one or more displays that may be used to display content provided by a virtual machine. Conventionally, a remote desktop session is limited to display of content through displays communicatively coupled to the primary client.

The technology described herein expands display options to include displays associated with a user's other client devices. For example, a user may access a virtual machine on a primary client but use the screen on a secondary client to view additional content provided by the virtual machine. Both the primary client and the secondary client are running remote desktop software, such as a remote desktop application. The remote desktop software works with a remote agent on the virtual machine to identify displays available to the user across the user's devices and enables selection of those displays. The selection may initially occur through the primary client.

The technology described herein enables use of two or more client devices. For the sake of simplicity, the technology will be described in the context of a primary client and a secondary client. The primary and secondary client(s) may have different connection types with the remote virtual machine. In some examples, the connection types include a full connection, a graphics connection, and a background connection. The full connection is established after authentication and is enabled to handle graphical operations and data, such as the transmission of graphical-user-interface content from the virtual machine to the primary client and input from client to the virtual machine. When a full connection is established, a background connection may also be established. The background connection may persist after the full connection ends. The full connection may end when the user ends an active session. The persistence of the background connection allows the technology described herein to determine whether a display associated with a client device that is not in an active session is available. The background connection is a lightweight connection that may also be described herein as a pre-connect connection or a non-final connection. In some examples, the primary device has a full connection with the virtual machine, while the secondary client may have a background connection, at least, initially. If a content is to be provided to the secondary device, then a full connection or graphics connection with the secondary client device may be formed. A graphics connection allows graphics information to be communicated from the virtual machine to the client but may lack some functionality provided by the full connection. For example, the graphics connection may not include a channel for input to be communicated from the secondary client to the virtual machine.

In addition to different connection types, the remote desktop applications on the primary and secondary clients may operate in different modes. In some examples, the modes include a graphics mode and a non-graphics mode. In graphics mode, the remote desktop is enabled to output graphics content provided by the virtual machine, such as a user interface. In non-graphics mode, graphical output is not processed. In non-graphics mode, various state communications may occur related to display availability and characteristics without a graphical interface being output. In some examples, the primary device runs in graphics mode, while the secondary client may run in non-graphics mode until display content is provided to the secondary client.

The virtual machine performs display discovery and then gives the user the ability to use discovered displays. Initially, the virtual machine may use background connections to interrogate one or more secondary clients associated with the user's account. The interrogation can result in a list of displays associated with the one or more secondary client devices. This list of available displays may be provided to the user through a display selection interface on a display connected to the primary client. The technology described herein presents a display interface to the user through the primary client showing one or more displays associated with a secondary client. Upon selection of a display through the display interface, the user may begin seeing content from the virtual machine using the selected display associated with the secondary client.

The technology described herein may limit the selection of secondary clients to devices located within a threshold physical distance from the primary client. The use of a distance threshold can provide extra security to prevent the content from being displayed through a secondary client that is not visible to the user of the primary client. This type of accidental display may result in an inadvertent communication of content to other users. In other aspects, a warning or notice is provided when the user selects a device that is outside of the distance threshold. The user may then be asked to affirmatively indicate that the selected device is correct.

The device and display characteristics obtained from a display associated with the secondary client may be used to establish characteristics of the communication session and content communicated, such as bitrate, Forward Error Correction (FEC), resolution, Dots Per Inch (DPI), smart encoding technology, encoding, and the like.

The virtual machine and various connection states with two or more clients may be managed by a cloud-access management system. A cloud-access management system provides access management functionality for different types of cloud computing offerings. The cloud-access management system can be a centralized platform designed to facilitate secure and efficient access to cloud-based resources from various devices acting as clients, including traditional desktops, laptops, and thin clients. The cloud-access management system can include software, hardware, and infrastructure components that enable users to authenticate, connect, and interact with remote resources hosted in the cloud. The cloud-access management system manages operations associated with user identities, permissions, and access policies to ensure that only authorized users can access specific resources. Additionally, it may incorporate features such as single sign-on (SSO), multi-factor authentication (MFA), and session management to enhance security and user experience.

Cloud access management supports access management operations for providing remote client sessions between local clients and remote clients to enable users to seamlessly access cloud-based resources. A connection management engine may operate based on a background connection, such as pre-connect connection that is an active lightweight connection at a client. The pre-connect connection may be used to determine what displays are available at a client. In aspects, the pre-connect connection may be used to quickly generate a full connection or graphics connection that is able to carry visual content. The pre-connect connection may not have adequate bandwidth for visual content, such as a video signal generated by a webcam. Connection management is provided using the connection management engine that is operationally integrated into the cloud-access management system. The cloud-access management system supports a connection management framework of computing components associated with configuration and employing pre-connect connections, un-finalized connections, and/or pre-existing remote client sessions.

A connection can refer to establishing a communication pathway, the communication pathway being between two or more of a client, a connection service, or a remote client. A remote client session can refer to a logical relationship - based on a connection - between a client and a remote client that persists over time and includes multiple interactions and transactions.

A remote desktop may be a purpose built client application that facilitates interaction with a virtual machine. A remote desktop application is a software tool that allows a user to connect to and control a computer, such as a virtual machine, from a remote location. This type of application enables users to access available resources, including files, applications, and network resources, as if they were physically present at the computer. These applications typically work by transmitting the screen display and input events (like keyboard and mouse actions) between the remote computer and the user's primary client device. Examples of remote desktop applications include Microsoft Remote Desktop, Windows App, TeamViewer, and AnyDesk. While the term desktop is often associated with a PC, the remote desktop application may operate on a phone, VR headset, tablet, and/or other devices.

In some instances, this detailed description may reference a single secondary client, however, the technology described herein may use display devices associated with one or more secondary client devices. Similarly, the technology described herein may use multiple displays associated with a single secondary client device. For example, the technology may send content from the virtual machine to an external monitor connected to a laptop, where the laptop is a secondary client, and to the laptop's integrated screen. Each display device (e.g., the external monitor and the integrated display) may be selected separately through a selection interface output through the primary client device.

### EXAMPLE SYSTEMS AND RESOURCES

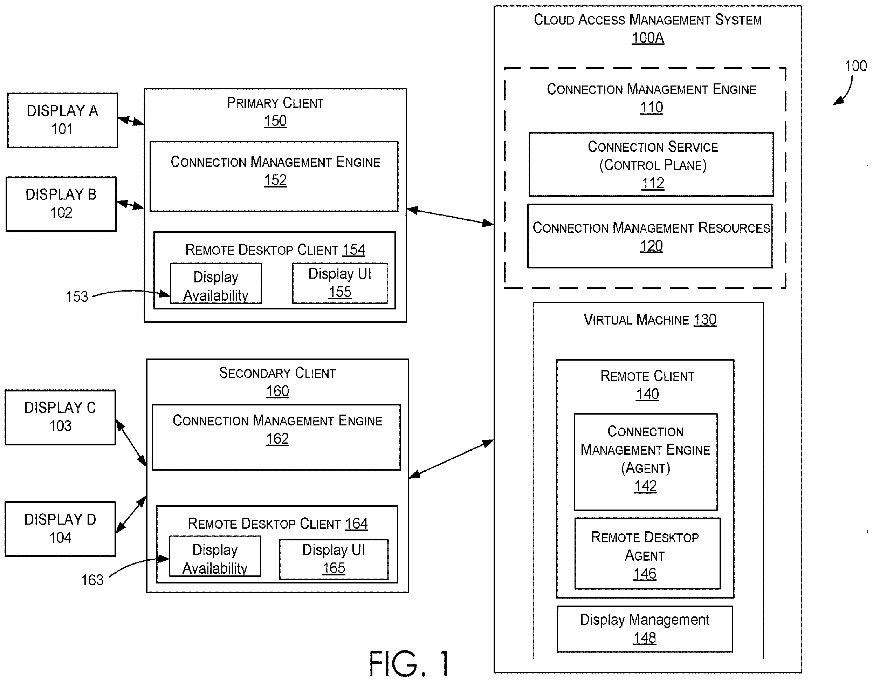

Aspects of the technical solution can be described by way of examples and with reference to FIG. 1. FIG. 1 illustrates a cloud computing environment (system) 100, cloud access management system 100A, connection management engine 110, connection service 112, connection management resources 120, virtual machine 130, remote client 140, connection management engine 142, remote desktop agent 146; display management 148, primary client 150, display A 101, display B 102, connection management engine 152, display availability interface 153, remote desktop client 154, display UI 155; secondary client 160, display C 103, display D 104, connection management engine 162, display availability client 163, remote desktop client 164, and display UI 165. While only one secondary client is illustrated, the presence of additional secondary clients is within the scope of the technology described herein.

The displays 101, 102, 103, and 104 can take various forms. Example displays include, but are not limited to, internal monitors, external monitors, virtual reality headsets, and augmented reality headsets. External monitors can be provided in different forms and use different display technologies and have different display characteristics. Different technologies include LCD (Liquid Crystal Display), OLED (Organic Light Emitting Diode), LED (Light Emitting Diode), Plasma Displays, AMOLED (Active Matrix Organic Light Emitting Diode), IPS (In-Plane Switching) (a type of LCD display), QLED (Quantum Dot LED), and projectors. Different forms include curved monitors, ultrawide monitors, gaming monitors, touchscreen monitors, portable monitors, televisions, computer monitors, medical monitors, e-ink monitors, security monitors, and multi-screen arrays. Display characteristics include resolution, reference rate, response time, color accuracy, contract ratio, viewing angle and brightness. Resolution refers to the number of pixels on the screen. Refresh rate, which may be measured in Hertz (Hz), indicates how many times per second the display refreshes the image. Higher refresh rates, like 120Hz or 240Hz, result in smoother motion. The response time is the time it takes for a pixel to change from one color to another, usually measured in milliseconds (ms). Lower response times reduce motion blur. Color accuracy refers to how accurately the display can reproduce colors. Contrast Ratio is the ratio between the brightest white and the darkest black the display can produce. Viewing angles indicate how well the display can be viewed from different angles. Brightness, which may be measured in nits, indicates how bright the display can get.

Display devices are not part of the core computer architecture, such as the CPU, motherboard, or power supply, but they enhance the computer's functionality by allowing users to view visual content. Displays can connect to a computer in various ways, including wired connections and wireless connections. Wired connections involve physical cables that connect the display to the computer. Common wired connections include USB, USB-C, High-Definition Multimedia Interface (HDMI), Display Port, VGA (Video Graphics Array), DVI (Digital Visual Interface), NDI (Network Device Interface), and SDI (Serial Digital Interface). Wireless connections use wireless technologies such as Bluetooth, Wi-Fi, or RF (radio frequency) to connect peripherals to the computer without the need for physical cables. Once connected, displays communicate with the computer through video transfer protocols. The computer's operating system and drivers manage this communication, ensuring that the display functions correctly and integrates seamlessly with the system.

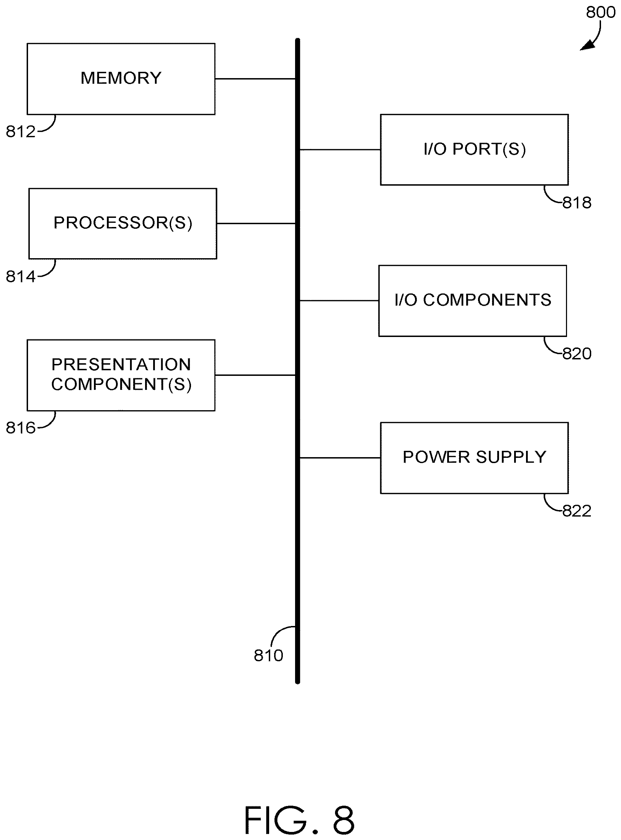

The primary client device 150 and the secondary client device 160 are user devices. User devices may comprise any type of computing device capable of use by a user. For example, in one aspect, user devices may be the type of computing device described in relation to FIG. 8 herein. By way of example and not limitation, a user device may be embodied as a personal computer (PC), a laptop computer, a mobile device, a smartphone, a tablet computer, a smart watch, a wearable computer, a fitness tracker, a virtual reality headset, augmented reality glasses, a personal digital assistant (PDA), a video player, a handheld communications device, a gaming device or system, an entertainment system, a vehicle computer system, an embedded system controller, a remote control, an appliance, a consumer electronic device, a workstation, or any combination of these delineated devices, or any other suitable device.

The remote desktop client 154 includes a display availability interface 153 and a display UI component 155. The display availability interface 153 provides information about displays associated with the primary client 150 to the display management component 148. The display information may include a description of the display, including a name, address, manufacturer, model, serial number, product type (e.g., monitor, TV), display size, supported timing, native resolution, supported resolutions, frequency range limits (e.g., max and minimum horizontal and vertical refresh rates), luminance data, pixel mapping data, aspect ratio, color profiles (e.g., color depth and chromaticity), and audio capabilities. The display information may be provided automatically upon joining a remote desktop session and then updated when displays are added or removed during the session. The display information may be provided in an EDID message. Alternatively, the display information may be provided in response to a query (interrogation) from the virtual machine 130. The virtual machine 130 stores the display information and makes it available to the display UI 155. In this way, the display UI 155 can display available displays to the user across multiple client devices. Thus, in the example shown, the four display devices (e.g., 101, 102, 103, and 104) or indications thereof would be shown in a user interface generated by the display UI 155. The remote desktop client 164 also includes a display availability interface 163 and a display UI component 165 that are similar to the display availability interface 153 and the display UI component 155 described previously. The display availability interface 163 and the display UI component 165 may not be used when the secondary client 160 is in a secondary role. However, different client devices may become primary devices or secondary devices based on the user's preference. The display availability interface 163 and the display UI component 165 may be included in instances of the remote desktop client 164 for use when the secondary client 160 serves as the primary client.

In addition to display information, the secondary client(s) may provide location information to the display management component 148. The location information may be used to determine whether the secondary client is within a threshold physical distance. The location information provided may vary depending on the location technology. Different location technologies can be used. The location technologies used include but are not limited to Global Positioning System (GPS), Wi-Fi Positioning System (WPS), Cellular Triangulation, IP Address Geolocation, and Bluetooth Low Energy (BLE).

GPS uses a network of satellites that send signals to a GPS receiver in the client device. By calculating the time it takes for the signals to reach the receiver, the client device can determine its precise location. If the client is GPS enabled, then the device may provide its location to the display management component 148.

WPS is a technology that determines the location of a device by measuring the signal strength from multiple Wi-Fi access points. This method is especially effective in indoor environments where GPS signals might be weak or unavailable. By triangulating the signals from various Wi-Fi networks, WPS can estimate the device's location with reasonable accuracy. This technology can be used to co-locate two devices by comparing their estimated locations based on the Wi-Fi signals they receive. Two devices connected to the same Wi-Fi access point may be determined to be within a threshold physical distance. Thus, the client device(s) may provide information about Wi-Fi access points.

Cellular triangulation uses the signal strength from multiple cell towers to estimate the client device's location. The client device's position is triangulated based on its distance from these towers. In aspects, two devices with a similar cellular signal profile may be determined to be within a threshold physical distance. Thus, the client device(s) may provide information about cell tower signals being received.

BLE beacons transmit signals that can be picked up by devices within range. By measuring the signal strength, the device can estimate its proximity to the beacon. In aspects, two devices with a similar BLE signal profile may be determined to be within a threshold physical distance. Thus, the client device(s) may provide information about BLE signals being received.

IP Address Geolocation uses the device's IP address to estimate its location. The IP address is mapped to a geographic location based on information from internet service providers. Thus, the client device(s) may provide its IP address.

In aspects, the display selection interface may give the user an option to select displays that are within a threshold physical distance. The threshold physical distance may vary depending on the location technology available. When a location is determined, the threshold physical distance between client devices may be 20 feet, 30 feet, 40 feet, or the like. When BLE, Wi-Fi, or Cellular triangulation is used, but a location is not determined within a threshold accuracy (e.g., 20, 30, or 40 feet) then a signal similarity may be used to determine whether the devices are within the threshold physical distance. For example, Wi-Fi location systems rely on the Received Signal Strength Indicator (RSSI) to estimate the distance between the devices and the access points. By comparing the RSSI values from multiple access points, the system can triangulate the position of the devices. If two devices have similar RSSI profiles from the same set of access points, they can be considered co-located and within the threshold physical distance. BLE and cellular triangulation can work in a similar way to determine whether devices are within the threshold physical distance. Signal profiles may be compared using dot product, Jaccard Coefficient, and/or L2-Normalization or other appropriate measures. For each measure, a threshold signal difference corresponding to the selected threshold physical distance may be designated and used as the threshold physical distance measure. Thus, if a measured signal profile difference of 0.05 corresponds with twenty feet, then the measured signal profile of 0.05 may be used as the threshold physical distance measure in implementations where 20 feet is the selected threshold physical distance.

The threshold physical distance limitation can provide enhanced security and prevent a user from inadvertently choosing to display content on a display that is not located nearby. When a display is not nearby, the audience of the display may be unknown and information may otherwise be inadvertently shared. In an alternative, all available displays are shown for selection by the user, but the user may be given a warning or notification regarding the location of the secondary client and asked to confirm the selection before activation of the second display is initiated.

When the user selects a display from the display selection interface, a display activation message may be sent to the display management component 148 if the display selected is associated with a different client device, such as the secondary client device 160. The display management component 148 may then assess the state of the secondary client 160 to determine whether the state is suitable to enable use of the selected display. Possible state characteristics can include the state of the connection between the virtual machine 130 and the secondary client 160. The state of the remote desktop client 164 may also be considered. For example, if the remote desktop client 164 is in a sleep mode, it may be changed to an active mode. Finally, the device state of the secondary client 160 may be considered. For example, if the secondary client 160 is asleep or in another standby mode then the display management component 148 may send a wake instruction. Similarly, the remote desktop client 164 state may be updated to a state suitable for processing the display signal, such as a graphic operation state.

The connection state of the secondary client 160 may also be evaluated for suitability. In aspects, the connection state may initially be in a background state, rather than a fully active state. Some signals may be transferred through the background state, such as keyboard and mouse inputs. Other signals, such as audio and video signals, may require a full connection or a graphics connection. In aspects, the display management component 148 may upgrade the connection type when needed.

The cloud-access management system 100A provides a centralized platform designed to facilitate secure and efficient access to cloud-based resources (e.g., remote clients). The connection service 112 provides a control plane (e.g., a virtual desktop control plane) that operates as a centralized management and administration infrastructure service that is responsible for managing user sessions, virtual machines, networking, authentication, and other aspects of a virtual desktop environment. The cloud-access management system 100A can facilitate transmission of visual content communications.

The connection management resources 120 can include operations, interfaces, and data components that support connection management functionality. Operations can include managing sessions, user authentication, resource provisioning, and monitoring. Interfaces are provided to users, administrators, and developers, facilitating access, configuration, and integration tasks. Data components include user profiles, session configurations, application images, virtual machine settings, and logging data, enabling efficient management, security, and compliance with the virtual desktop environment.

Virtual machine 130 is a representative virtual machine (VM) that is provisioned to serve as a session host for users accessing desktops and applications remotely. A VM can run an operating system (e.g., WINDOWS) and is configured with the necessary resources, such as CPU, memory, storage, and network connectivity, to support multiple concurrent user sessions. VMs are managed and maintained to ensure scalability, reliability, and performance for the desktop virtualization environment.

A client (e.g., primary client 150 or secondary client 160) connects to a remote client (e.g., remote client 140) to access cloud-based resources. The client 150, 160 can include a connection management engine (e.g., connection management engine 152, connection management engine 162) that enables connection management functionality on the client 150, 160. The client 150, 160 runs a remote desktop client (e.g., remote desktop client 154, remote desktop client 164) that enables users to access and control the remote client 140. In aspects, the primary client 150 receives a request to launch the remote client 140. The request can be associated with an indication from a user to open or activate a local client interface. As mentioned, different types of connections are possible between a client device and the virtual machine. Upon receiving a request to launch the remote client, the connection management engine 152, 162 may determine what type of connection exists (if any) and either forms a new connection, uses the existing connection, or upgrades the connection to match a preferred connection type. For example, the connection management engine 152, 162 at the client 150, 160 may determine whether the client 150, 160 is associated with a connected state, an express connection state, or a disconnected state. The express connection state can refer to any state that supports express connection in that the connection to the remote client 140 is expedited based on one or more connection management operations. Express connection states are useful for rapid activation of a display device on a secondary client. Instead of starting with no connection, the express connection allows a display device to be activated quickly by quickly forming an appropriate connection.

The express connection state is identified from the following: a pre-connect connection state; or a cloned network context state. The pre-connect connected state is associated with a pre-connect connection of the client 150 and 160, the pre-connect connection is an active lightweight connection that enables an express connection between the client 150 and 160 and the remote client 140. The cloned network context state is associated with the client 150 of a user when a secondary client 160 of the user is connected to an existing remote client session. A cloned network context from a secondary client 160 enables an express connection between the client 150 and the remote client 140.

Establishing the remote client session can include communicating a request to complete a remote logon process and activating a client interface for the remote client 140. In this way, when the client 150 is associated with the connected state, the client interface for the remote client 140 is activated without needing to communicate a request to complete a remote logon process. And when the client 150, 160 is associated with a disconnected state, the client 150, 160 communicates a request for a new connection for establishing the remote client session; then communicates a request to complete a remote logon process; and then activates a client interface for the remote client 140. Moreover, establishing the remote client session is based on a remote logon process associated with a first set of operations that configure an un-finalized connection, and a secondary set of operations that configures a finalized connection using the un-finalized connection. The first set of operations are pre-graphics operations and the secondary set of operations are graphics operations.

It is contemplated that the remote client session can be used to connect a secondary client 160 associated with a user of the primary client 150, where the primary client 150 and the secondary client 160 are simultaneous active connections to the remote client session. In this way, displays from both clients may be used simultaneously. The primary client 150 and the secondary client 160 are simultaneously connected to the remote client session.

The connection service 112 enables hosting remote client sessions on session hosts (e.g., virtual machine 130) with secure endpoints for client-session host connections. The remote client 140 connects to a client 150, 160 via a remote connection associated with the remote client session. The connection service 112 and/or the remote client 140 support connection management. In particular, the remote client 140 includes the connection management engine 142 and remote desktop agent 146 associated with connection management operations. The connection management engine 142 determines a status associated with a remote client 140; based on determining the status, the connection management engine 142 executes one or more connection management operations. Based on executing the one or more connection management operations, the remote client 142 establishes a remote client session between a remote client 140 and a client 150, 160.

By way of context, a connection refers to a communication link between a client and a remote client. Being connected means that the client has established a communication link with the remote client. Being active means that a connected client is actively sending, receiving, or processing data with the remote client. An active client can be powered on and ready to execute commands. A client can be inactive, but still connected to an existing session. For example, a user of the client may establish a session with a remote client, but if there is no activity or interaction occurring within the session for a period of time, the client may go into an inactive state. A client that becomes inactive on an existing session can be reactivated on the session (e.g., via a request to reactivate the client that was inactive, but still connected). In this way, a connected state can describe two different types of connected states - a connected state with an active client or a connected state with an inactive client. In both situations, a remote client session exists, and if the client is an inactive client, the client can be reactivated on the remote client session that exists. For example, the client may be reactivated upon receiving an indication that a display device connected to the client is to be used. The active client may not have an activated remote client session window, which can be activated after determining a connection exists, and the client is active, but without the activated remote session window.

The connection management engine may further split a remote client session configuration sequence into a first set of operations (i.e., pre-graphics operations) and a secondary set of operations (i.e., graphics operations and peripheral operations). The remote client session configuration can be associated with authentication, authorization, connection configuration, session brokerage, connection establishment, and/or session initialization. For example, preparing a remote client for user interaction can include setting up user preferences, configuring the remote client's appearance, and launching a shell while executing its startup scripts. Additionally, the remote client session configuration handles user authentication and access rights to ensure a secure and personalized computing experience.

The pre-graphics operations include a subset of operations that can be performed before any graphical elements are rendered or displayed in a user interface. The graphics operations include a subset of operations involved in rendering and displaying graphical elements within a user interface. In this way, the pre-graphics operations can be executed to configure an unfinalized connection, while the graphics operations are subsequently executed, for example, based on a user action to launch a client interface for the remote client or the selection of a display associated with a secondary client. The un-finalized connections can be generated for multiple clients at the same time - each associated with a user. The connection management engine can provide for multiple active connections to the same remote client session.

The connection management engine further supports scenarios where a user is connected to a remote client session or remote client from multiple devices (e.g., a primary client and a secondary client). A pre-connect connection for a secondary client can be employed to instantly connect a user to the secondary client from the primary client - passing control from the primary client to the secondary client. The connection management engine can also support establishing multiple connections from different clients that are active and connected to the same remote client session. If a remote client session - for a primary client - gets disconnected due to a machine restarting or a network glitch, the connection management engine can retrieve a network context from a secondary client to re-establish the remote client session for the primary client.

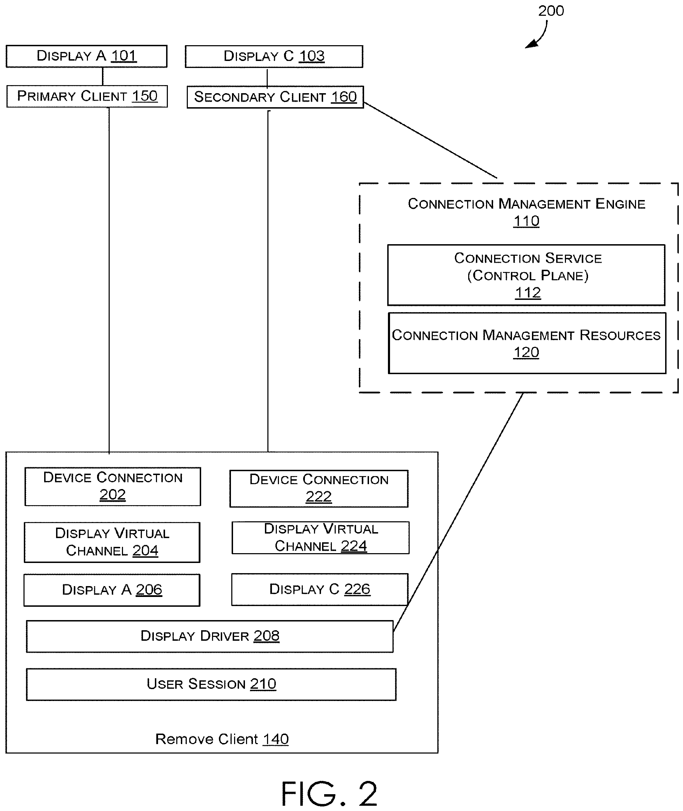

Turning now to FIG. 2, a virtual machine environment 200 including remote client 140, the primary client 150, and the secondary client 160 is illustrated. As previously described, the primary client 150 is coupled to display A 101 and the secondary client 160 is coupled to display C 103. FIG. 2 illustrates an implementation where the primary client 150 is connected to the user session 210 and the secondary client 160 is subsequently added. As mentioned, the user session is a logical relationship between the primary client 150 and the remote client 140 that persists over time and includes multiple interactions and transactions. When a user logs on to a Remote Desktop Services-enabled computer, a session is started for the user. Each session may be identified by a unique session ID. The remote desktop application allows a user to access and control the remote client 140 from the primary client 150. The session includes the transmission of the screen display to display A 101 and input events (like keyboard and mouse actions).

The remote client includes virtual display driver 208. The virtual display driver 208 creates a virtual display driver specific to the remote session. The virtual display driver 208 is software that performs the role of display driver on a computing device. A display driver manages the communication between the operating system, the graphics processing unit (GPU), and the display hardware. The virtual display driver may identify multiple characteristics of display A 101, including resolution and refresh rate management, color depth control, gamut control, image scaling, image rotation, interface compatibility, and multi-monitor support. Multi-monitor support enables the use of multiple monitors, allowing for extended or mirrored displays. Interface compatibility ensures compatibility with various display interfaces like HDMI, DisplayPort, and VGA between the client and the display (if the display is external). The display driver 208 can set these characteristics for both the display A session 206 and the display C session 226.

The virtual display channel 204 allows for the management and control of display settings and configurations of the display device during a remote session. The role and functionality of the virtual display channel 204 includes, but is not limited to, display configuration management, dynamic display updates, multi-monitor support, and enhanced graphics performance. Display configuration management enables the remote desktop client to request changes in display settings, such as resolution, orientation, and multi-monitor setups. Dynamic display updates allow changes to the display configuration to be made without needing to restart the remote session. Multi-monitor support can manage multiple monitors, providing an extended desktop experience. For example, the user could change from an extended desktop across multiple displays to a mirrored experience across multiple displays. Enhanced graphics performance optimizes the delivery of graphical content to ensure smooth performance and minimal latency.

The device connection 202 adopts several characteristics to ensure a smooth and secure user experience. These characteristics can include security, such as encryption of data transmitted. Another characteristic is network bandwidth and latency management, which involves managing the amount of data that can be transmitted over the network and the delay in data transmission. The device connection 202 can also select the FEC and bitrate.

The device connection 202 may manage encoding, including smart encoding. Smart encoding in a remote desktop context refers to the use of advanced techniques to optimize the transmission of graphical data from the remote server 140 to the local client. Smart encoding can use adaptive graphics, in which the encoding quality is adjusted based on the available network bandwidth and the content being displayed. Smart encoding can include mixed-mode encoding, which separates text and image encoding using different codecs to provide the best quality and lowest encoding cost for each type of content. Smart encoding can include hardware and software-based encoding, which utilizes either the GPU to encode graphics data and the CPU to encode non-graphics data. Smart encoding can also include delta detection and caching, which reduces the amount of data that needs to be transmitted by only sending changes (deltas) in the display. The encoding can use various codecs, such as H.264 (AVC) and H.265 (HEVC), to encode and decode graphical data.

In aspects, the technology described herein may receive information about display C 103 from the secondary client 160. This information may be provided to the connection management engine 110 through an existing connection while graphics content is not being provided to the secondary client 160. The information may indicate that display C is available for content display along with characteristics of the display. Location information for the secondary client 160 and/or display may be provided. Though not shown, similar information may be provided for other secondary clients and associated displays. A list of available displays may be provided to the user through the primary client 150 and the display A 101. As explained previously, a location analysis may be completed to determine that display A 101 and display C are within a threshold physical distance. If the displays are not within a threshold physical distance, then the display may be omitted from a list of selectable displays. Alternatively, the display may be provided with a warning. In aspects, an additional user acknowledgment may be requested when the threshold physical distance between the primary device (and/or primary display) and the secondary device (and/or primary display) is not satisfied.

Upon selection by the user, the display pipeline for display C 103 may be built. The display pipeline includes the display C session 226, the display virtual channel 224, and the device connection 222. The display C session 226, the display virtual channel 224, and the device connection 222 may include the same functions as described previously with reference to the display virtual channel 204, device connection 202, and the display A session 206, except that they are associated with display C 103. The various display characteristics and channel characteristics may be different for display A 101 and display C 103. Aspects of the technology described herein may select optimal characteristics for each display. In aspects, user preferences for each display are maintained and used to set up the initial characteristics.

### EXAMPLE METHODS

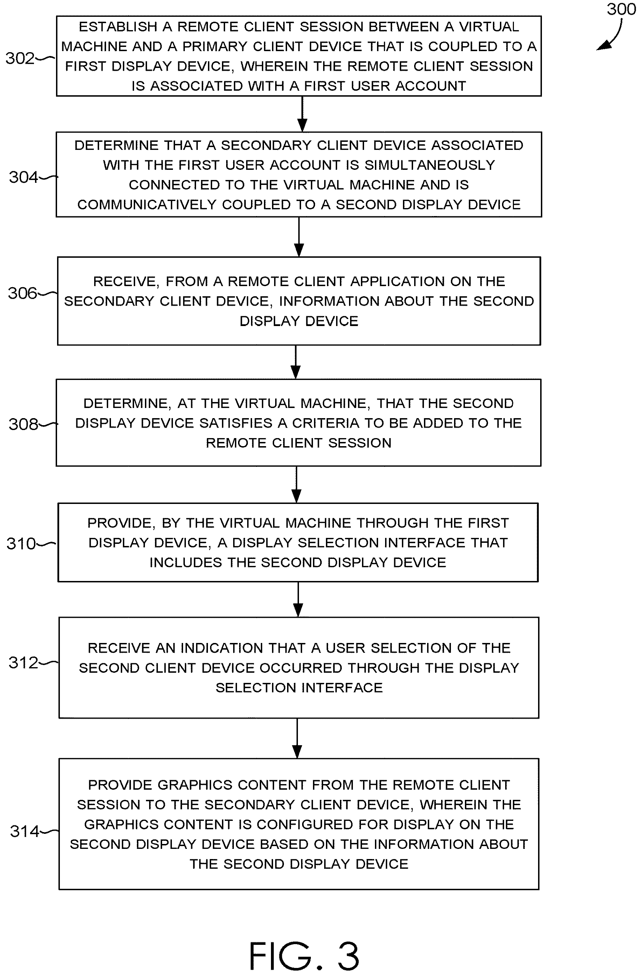

With reference to FIGS. 3, 4, and 5, flow diagrams are provided illustrating methods for providing display access across multiple devices using a virtual machine. The methods may be performed using the cloud-access management system described herein. In embodiments, one or more computer-storage media have computer-executable or computer-useable instructions embodied thereon that, when executed by one or more processors can cause the one or more processors to perform the methods (e.g., computer-implemented method) in the cloud-access management system (e.g., a computerized system). FIGS 3, 4, and 5 describe a single secondary client, however, the technology described herein may use display devices associated with one or more secondary client devices. Similarly, the technology described herein may use multiple displays associated with a single secondary client device. For example, the technology may send content from the virtual machine to an external monitor connected to a laptop, where the laptop is a secondary client, and to the laptop's integrated screen. Each display device (e.g., the external monitor and the integrated display) may be selected separately through a selection interface output through the primary client device.

Turning to FIG. 3, a flow diagram is provided that illustrates a method 300 for providing display access across multiple devices. At step 302, the method 300 includes establishing a remote client session between a virtual machine and a primary client device that is coupled to a first display device. The remote client session is associated with a first user account.

At step 304, the method 300 includes determining that a secondary client device associated with the first user account is simultaneously connected to the virtual machine and is communicatively coupled to a second display device. At step 306, the method 300 includes receiving, from a remote client application on the secondary client device, information about the second display device. The information may include location information and other information about the second display device's display characteristics.

At step 308, the method 300 includes determining, at the virtual machine, that the second display device satisfies a criteria to be added to the remote client session. The criteria may be that a distance between the primary client device and the secondary client device is less than a threshold physical distance.

At step 310, the method 300 includes providing, by the virtual machine through the first display device, a display selection interface that includes the second display device. At step 312, the method 300 includes receiving an indication that a user selection of the second client device occurred through the display selection interface. At step 314, the method 300 includes providing graphics content from the remote client session to the secondary client device. The graphics content is configured for display on the second display device based on the information about the second display device.

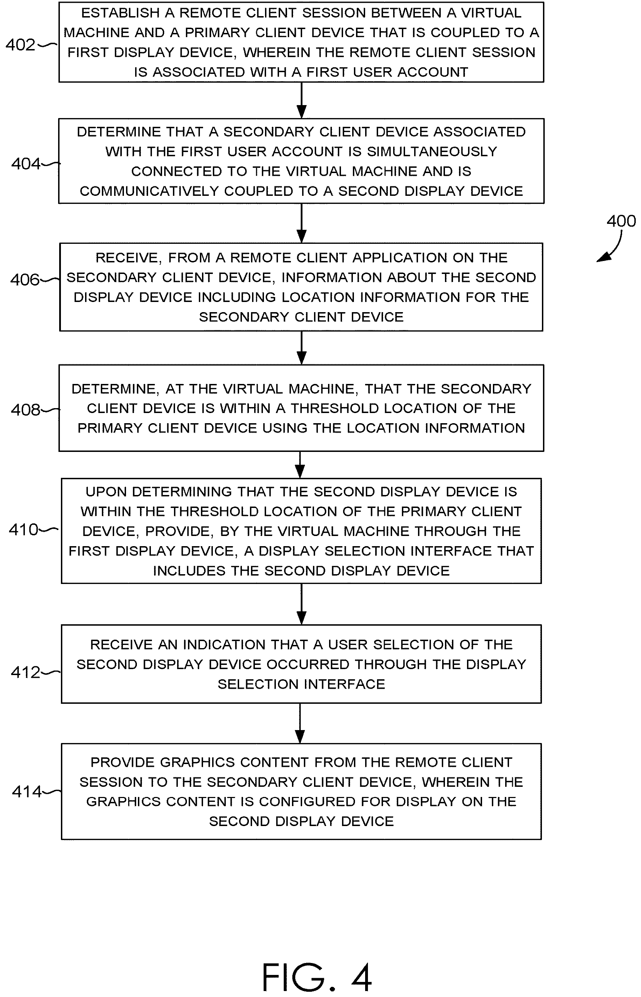

Turning to FIG. 4, a flow diagram is provided that illustrates a method 400 for providing display access across multiple devices. At step 402, the method 400 includes establishing a remote client session between a virtual machine and a primary client device that is coupled to a first display device, wherein the remote client session is associated with a first user account. At step 404, the method 400 includes determining that a secondary client device associated with the first user account is simultaneously connected to the virtual machine and is communicatively coupled to a second display device. At step 406, the method 400 includes receiving, from a remote client application on the secondary client device, information about the second display device including location information for the secondary client device.

At step 408, the method 400 includes determining, at the virtual machine, that the secondary client device is within a threshold location of the primary client device using the location information. At step 410, the method 400 includes upon determining that the second display device is within the threshold location of the primary client device, providing, by the virtual machine through the first display device, a display selection interface that includes the second display device. At step 412, the method 400 includes receiving an indication that a user selection of the second display device occurred through the display selection interface. At step 414, the method 400 includes providing graphics content from the remote client session to the secondary client device. The graphics content is configured for display on the second display device.

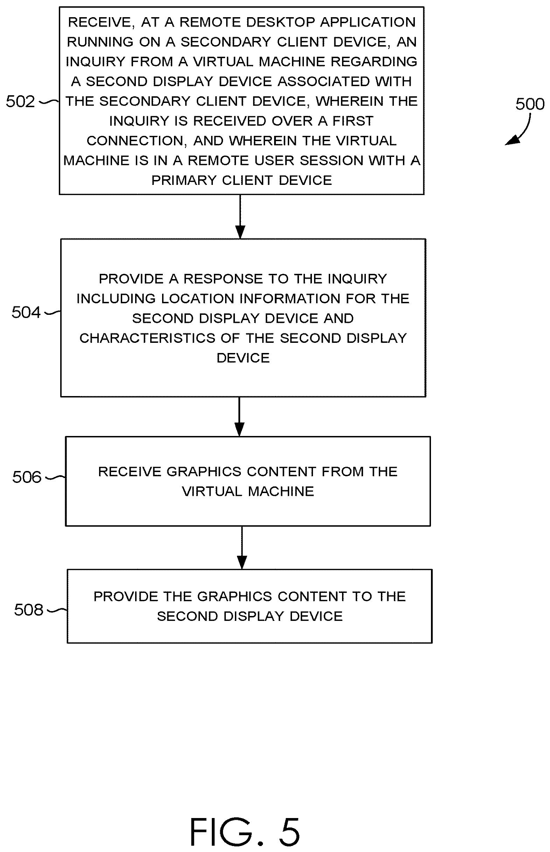

Turning to FIG. 5, a flow diagram is provided that illustrates a method 500 providing display access across multiple devices. At step 502, the method 500 includes receiving, at a remote desktop application running on a secondary client device, an inquiry from a virtual machine regarding a second display device associated with the secondary client device. The inquiry is received over a first connection. The virtual machine is in a remote user session with a primary client device. The virtual machine is inquiring about the second display while in a remote session with the primary client device. In aspects, the virtual machine is also providing graphics content to the primary client device. At step 504, the method 500 includes providing a response to the inquiry including location information for the second display device and characteristics of the second display device. At step 506, the method 500 includes receiving graphics content from the virtual machine. At step 508, the method 500 includes providing the graphics content to the second display device.

### TECHNICAL IMPROVEMENT

Embodiments of the present techniques have been described with reference to several inventive features (e.g., operations, systems, engines, and components) associated with a cloud access management system. Inventive features described include: operations, interfaces, data structures, and arrangements of computing resources associated with providing the functionality described herein relative with reference to a connection management engine. Functionality of the embodiments of the present invention have further been described, by way of an implementation and anecdotal examples - to demonstrate that the operations for providing the connection management engine as a solution to a specific problem in device management technology to improve computing operations in cloud access management systems.

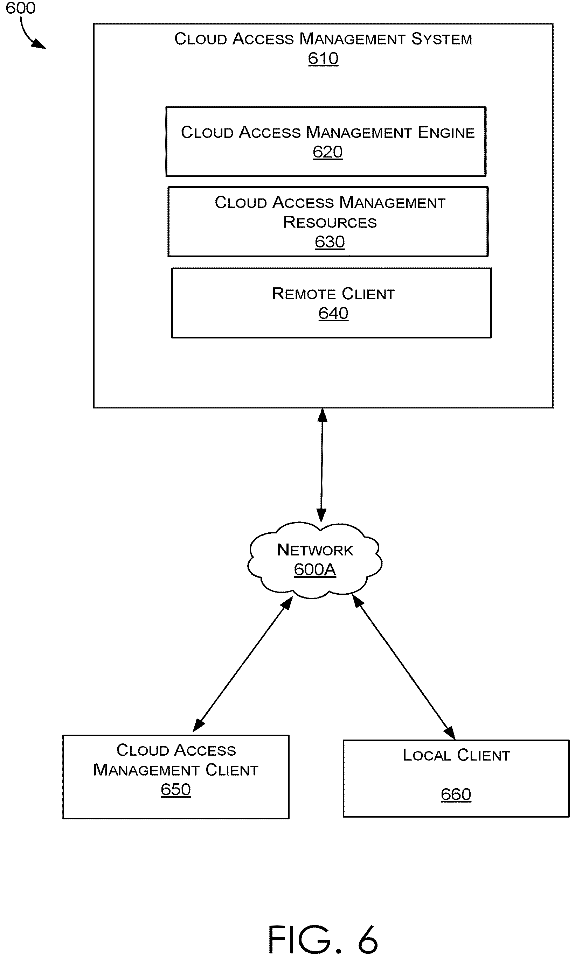

Aspects of the technical solution have been described by way of examples and with reference to FIG. 1. FIG. 1 is a block diagram of an exemplary technical solution environment, based on example environments described with reference to FIGS. 6, 7 and 8 for use in implementing embodiments of the technical solution are shown. Generally, the technical solution environment includes a technical solution system suitable for providing the example cloud computing system 100 in which methods of the present disclosure may be employed. In particular, FIG 1 illustrates a high level architecture of the cloud computing system 100 in accordance with implementations of the present disclosure, among other engines, managers, generators, selectors, or components not shown (collectively referred to herein as "components").

### ADDITIONAL SUPPORT FOR DETAILED DESCRIPTION EXAMPLE CLOUD ACCESS MANAGEMENT SYSTEM IN A COMPUTING ENVIRONMENT

Referring now to FIG. 6, FIG. 6 illustrates a computing environment in which implementations of the present disclosure may be employed. In particular, FIG. 6 shows a high level architecture of an example cloud computing platform 600 and cloud access management system 610 that can host a technical solution environment. It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The cloud computing environment 100 provides computing system resources for different types of managed computing environments. For example, the cloud computing platform supports delivery of computing services - including compute, servers, storage, databases, networking, and intelligence. The components of cloud computing environment 600 may communicate with each other over a network 600A which may include, without limitation, one or more local area networks (LANs) and/or wide area networks (WANs).

The cloud-access management system 610 provides cloud access management functionality for different types of cloud computing offerings. The cloud-access management system can be a centralized platform designed to facilitate secure and efficient access to cloud-based resources from various devices, including traditional desktops, laptops, and thin clients. The cloud-access management system can include software, hardware, and infrastructure components that enable users to authenticate, connect, and interact with remote resources hosted in the cloud. The cloud-access management system manages operations associated with user identities, permissions, and access policies to ensure that only authorized users can access specific resources. Additionally, it may incorporate features such as single sign-on (SSO), multi-factor authentication (MFA), and session management to enhance security and user experience.

Cloud access management system 610 enables secure and efficient access for clients to remote resources, such as remote clients, through a centralized platform. It encompasses authentication mechanisms to verify the identities of users and devices seeking access, including multi-factor authentication for enhanced security. Authorization protocols govern user permissions and access levels, dictating which resources or applications each user can utilize. Session management functionalities handle the establishment, monitoring, and termination of user sessions, optimizing performance while ensuring compliance with security policies. The cloud-access management system also manages connections between clients and remote clients, employing robust encryption and data integrity measures to protect sensitive information during transmission.

The cloud-access management system 610 includes a cloud access management engine 620 that is a computing environment that supports executing computational tasks associated with the cloud-access management system 610. The cloud-access management engine 620 can be a hardware or software component that performs computational operations, such as, mathematical calculations, data processing, and algorithm execution. The cloud-access management system 610 integrates cloud access management resources 630 into cloud access management system 610 to effectively provide cloud access management in a computing environment.

The cloud-access management resources 630 refer to computing elements (e.g., components, capability, or entities) that collectively enable the cloud-access management engine 620 operations. The cloud-access management resources 630 encompass a spectrum of computing elements, beginning with the diverse operations The cloud-access management resources 630 can perform, ranging from complex computations to data manipulations. Interfaces, an integral part of the cloud-access management resources 630, provide the means for both user interaction and seamless integration with external systems, ensuring a dynamic and interactive computing experience. The data facet of the cloud-access management resources 630 involves various types: input data, which is the information provided for processing; processing data, representing the data manipulated during computational tasks; and output data, the results generated by the cloud-access management engine 620. In this way, The cloud-access management resources 630 support the broader cloud access management engine 620 and cloud access management system 610.

The cloud-access management resources can include connection management resources that encompass the core operations, interfaces, and data components within cloud access management system 110, collectively supporting its functionality in overseeing diverse devices across the cloud computing system 100. Operations within the connection management engine 110 include connection establishment, authentication, session management, error handling, logging, and monitoring, ensuring seamless user experiences and optimal resource utilization. Interfaces, including graphical user interfaces, command-line interfaces, web-based portals, APIs, and integration points, facilitate initiating and managing connections while enabling programmatic interaction and integration with other systems. Data components consist of connection profiles, session data, access control lists, performance metrics, and security keys are meticulously managed to ensure data integrity, confidentiality, and availability. The connection management resources 120 facilitate seamless, secure, and efficient communication between clients and remote clients, enabling users to access cloud resources with reliability and ease.

The cloud-access management system 610 provisions remote clients (e.g., remote client 640). A remote client 640 can be virtual desktop environment (e.g., Desktop as a Service - DaaS). The remote client 640 leverages virtualization, cloud computing, and network technologies to deliver scalable, secure, and cost-effective virtual desktop environments to users, enabling flexible remote access to computing resources from any location, on any device. DaaS providers provide Virtualized Desktop Infrastructures (VDI) that host virtual desktops on servers in their data centers. These virtual desktops are created using virtualization technologies such as hypervisors or containerization platforms. Each virtual desktop includes an operating system, applications, data, and user settings.

The client 650 connects to the remote client 640. The client 650 can be a software application or device installed or used on the end-user's local hardware, such as a desktop computer, laptop, thin client, or mobile device. This client software facilitates the remote connection to the VDI hosted by the remote client provider, allowing end-users to access their virtual desktop environments over the internet. Client 650 can be a managed client that is centrally controlled and monitored by cloud access management system 510. Managed clients typically have device management software installed or configured on them, allowing administrators to enforce security policies, configure settings, deploy applications, and perform remote management tasks. The client 650 can be an unmanaged client that operates independently without being centrally controlled or monitored. These devices lack device management software or configurations, and users have full control over their settings and applications.

The cloud-access management client 660 supports access to cloud access management system 610. Cloud access management client 660 provides a graphical or command-line interface for users or administrators to monitor and manage user sessions to ensure proper termination, timeout, and session activity logging. Configuring authentication methods such as passwords, multi-factor authentication (MFA), biometrics, or single sign-on (SSO) to verify user identities, and setting up authorization rules and permissions to govern user access to specific resources, applications, or data. The cloud-access management client 660 supports centralized access management within a computing environment empowering efficient access administration.

### EXAMPLE DISTRIBUTED COMPUTING SYSTEM ENVIRONMENT

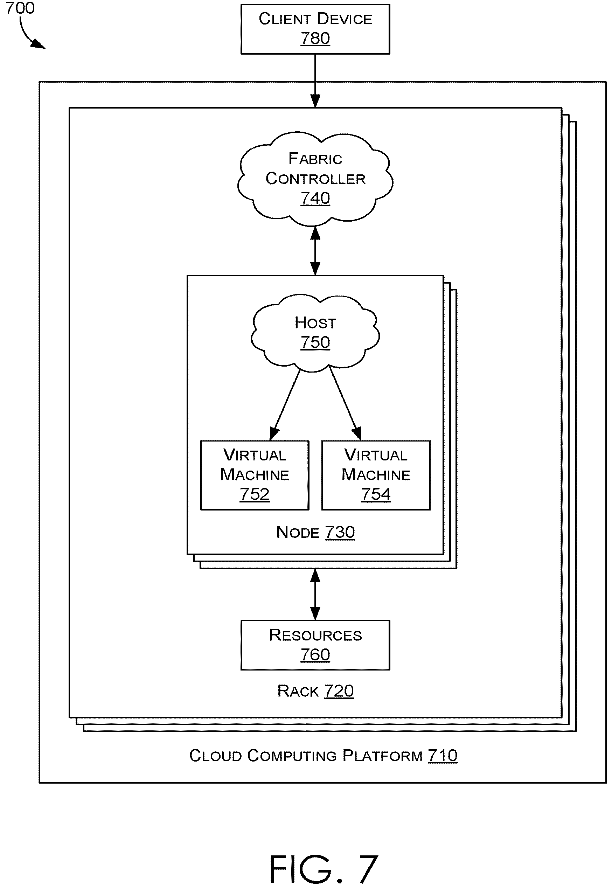

Referring now to FIG. 7, FIG. 7 illustrates an example distributed computing environment 700 in which implementations of the present disclosure may be employed. In particular, FIG. 7 shows a high-level architecture of an example cloud computing platform 710 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 700 that includes cloud computing platform 710, rack 720, and node 730 (e.g., computing devices, processing units, or blades) in rack 720. The technical solution environment can be implemented with cloud computing platform 710 that runs cloud services across different data centers and geographic regions. Cloud computing platform 710 can implement fabric controller 740 component for provisioning and managing resource allocation, deployment, upgrade, and management of cloud services. Typically, cloud computing platform 710 acts to store data or run service applications in a distributed manner. Cloud computing infrastructure 710 in a data center can be configured to host and support operation of endpoints of a particular service application. Cloud computing infrastructure 710 may be a public cloud, a private cloud, or a dedicated cloud.

Node 730 can be provisioned with host 750 (e.g., operating system or runtime environment) running a defined software stack on node 730. Node 730 can also be configured to perform specialized functionality (e.g., compute nodes or storage nodes) within cloud computing platform 710. Node 730 is allocated to run one or more portions of a service application of a tenant. A tenant can refer to a customer utilizing resources of cloud computing platform 710. Service application components of cloud computing platform 710 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 730, nodes 730 may be partitioned into virtual machines (e.g., virtual machine 752 and virtual machine 754). Physical machines can also concurrently run separate service applications. The virtual machines or physical machines can be configured as individualized computing environments that are supported by resources 760 (e.g., hardware resources and software resources) in cloud computing platform 710. It is contemplated that resources can be configured for specific service applications. Further, each service application may be divided into functional portions such that each functional portion is able to run on a separate virtual machine. In cloud computing platform 710, multiple servers may be used to run service applications and perform data storage operations in a cluster. In particular, the servers may perform data operations independently but exposed as a single device referred to as a cluster. Each server in the cluster can be implemented as a node.

Client device 780 may be linked to a service application in cloud computing platform 710. Client device 780 may be any type of computing device, which may correspond to computing device 700 described with reference to FIG. 7, for example, client device 780 can be configured to issue commands to cloud computing platform 710. In embodiments, client device 780 may communicate with service applications through a virtual Internet Protocol (IP) and load balancer or other means that direct communication requests to designated endpoints in cloud computing platform 710. The components of cloud computing platform 710 may communicate with each other over a network (not shown), which may include, without limitation, one or more local area networks (LANs) and/or wide area networks (WANs).

### EXAMPLE COMPUTING ENVIRONMENT

Having briefly described an overview of embodiments of the present technical solution, an example operating environment in which embodiments of the present technical solution may be implemented is described below in order to provide a general context for various aspects of the present technical solution. Referring initially to FIG. 8 in particular, an example operating environment for implementing embodiments of the present technical solution is shown and designated generally as computing device 800. Computing device 800 is but one example of a suitable computing environment and is not intended to suggest any limitation as to the scope of use or functionality of the technical solution. Neither should computing device 800 be interpreted as having any dependency or requirement relating to any one or combination of components illustrated.

The technical solution may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technical solution may be practiced in a variety of system configurations, including hand-held devices, consumer electronics, general-purpose computers, more specialty computing devices, etc. The technical solution may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output ports 818, input/output components 820, and illustrative power supply 822. Bus 810 represents what may be one or more buses (such as an address bus, data bus, or combination thereof). The various blocks of FIG. 8 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art and reiterate that the diagram of FIG. 8 is merely illustrative of an example computing device that can be used in connection with one or more embodiments of the present technical solution. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc.

### ADDITIONAL STRUCTURAL AND FUNCTIONAL FEATURES OF EMBODIMENTS OF THE TECHNICAL SOLUTION

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technical solution is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technical solution are described with reference to a distributed computing environment; however, the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present technical solution may generally refer to the technical solution environment and the schematics described herein, it is understood that the techniques described may be extended to other implementation contexts.

For purposes of this disclosure the word "support" refers to provisioning of functionality, services, or assistance by a computing component or through computing operations within a broader computing system. When a computing component or set of operations supports a specific functionality, it means that it plays a role in enabling or executing that particular aspect of the computing system. This support can manifest in various ways, including the processing of data, execution of operations, management of resources, and ensuring compatibility or interoperability with other components. Additionally, support may involve providing interfaces, APIs (Application Programming Interfaces), or protocols that allow seamless interaction and integration with other elements of the computing system. The concept of support extends beyond mere functionality provision to encompass maintenance, troubleshooting, and the overall optimization of computing resources to ensure the robust and efficient operation of the computing system.

Embodiments of the present technical solution have been described in relation to particular embodiments which are intended in all respects to be illustrative rather than restrictive. Alternative embodiments will become apparent to those of ordinary skill in the art to which the present technical solution pertains without departing from its scope.

From the foregoing, it will be seen that this technical solution is one well adapted to attain all the ends and objects hereinabove set forth together with other advantages which are obvious and which are inherent to the structure.

It will be understood that certain features and sub-combinations are of utility and may be employed without reference to other features or sub-combinations. This is contemplated by and is within the scope of the claims.

In one aspect, there is provided a computerized system comprising: one or more computer processors; and computer memory storing computer-useable instructions that, when used by the one or more computer processors, cause the one or more computer processors to perform operations, the operations comprising: establishing a remote client session between a virtual machine and a primary client device that is coupled to a first display device, wherein the remote client session is associated with a first user account; determining that a secondary client device associated with the first user account is simultaneously connected to the virtual machine and is communicatively coupled to a second display device; receiving, from a remote client application on the secondary client device, information about the second display device; determining, at the virtual machine, that the second display device satisfies a criteria to be added to the remote client session; providing, by the virtual machine through the first display device, a display selection interface that includes the second display device; receiving an indication that a user selection of the second client device occurred through the display selection interface; and providing graphics content from the remote client session to the secondary client device, wherein the graphics content is configured for display on the second display device based on the information about the second display device.

In one embodiment, the operations further comprise sending an inquiry to the secondary client device over a background connection between the secondary client device and the virtual machine, wherein the inquiry seeks information about the second display device.

In one embodiment, the remote client session between the virtual machine and the primary client device is carried by a graphics connection suitable for carrying the graphics content.

In one embodiment, the operations further comprising, upon receiving the indication of the selection, transitioning the secondary client device from a background connection to a graphics connection.

In one embodiment, the background connection is an active lightweight connection that is not suitable for carrying the graphics content.

In one embodiment, the criteria to be added to the remote client session is the primary client device and the secondary client device being located within a threshold physical distance.

In one embodiment, the remote client application runs on the primary client device and the secondary client device.

In one embodiment, establishing the remote client session comprises: communicating a request to complete a remote logon process; and activating a client interface for the virtual machine.

In one aspect, there is provided one or more computer-storage media having computer-executable instructions embodied thereon that, when executed by a computing system having a processor and memory, cause the processor to perform operations, the operations comprising: establishing a remote client session between a virtual machine and a primary client device that is coupled to a first display device, wherein the remote client session is associated with a first user account; determining that a secondary client device associated with the first user account is simultaneously connected to the virtual machine and is communicatively coupled to a second display device; receiving, from a remote client application on the secondary client device, information about the second display device including location information for the secondary client device; determining, at the virtual machine, that the secondary client device is within a threshold location of the primary client device using the location information; upon determining that the second display device is within the threshold location of the primary client device, providing, by the virtual machine through the first display device, a display selection interface that includes the second display device; receiving an indication that a user selection of the second display device occurred through the display selection interface; and providing graphics content from the remote client session to the secondary client device, wherein the graphics content is configured for display on the second display device.

In one embodiment, the location information is a GPS location.

In one embodiment, the location information is a signal profile.

In one embodiment, a connection to the secondary client device used to determine the second display is available is a background connection.

In one embodiment, a connection to the secondary client device used to communicate the graphics content is a full connection.

In one embodiment, wherein the operations further comprises selecting an encoding technology based on the graphics content and the information about the second display device.

In one embodiment, the operations further comprises selecting a bit rate based the graphics content and the information about the second display device.

In one embodiment, the operations further comprises selecting a dots per inch for the graphics content based on the information about the second display device.

In one aspect, the method comprising: receiving, at a remote desktop application running on a secondary client device, an inquiry from a virtual machine regarding a second display device associated with the secondary client device, wherein the inquiry is received over a first connection, and wherein the virtual machine is in a remote user session with a primary client device; providing a response to the inquiry including location information for the second display device and characteristics of the second display device; receiving graphics content from the virtual machine; and providing the graphics content to the second display device.

In one embodiment, the location information is used to determine whether the primary client device and the secondary client device are within a threshold physical distance.

In one embodiment, the first connection is a background connection.

In one embodiment, a primary client device and the secondary client device are simultaneously connected to the virtual machine.

The technology described herein enables a remote desktop application to provide visual content to displays associated with multiple client devices, not just the primary client device serving as the active endpoint. Remote desktop software allows a user to access and control a computer or server from a remote location. Conventionally, a remote desktop session is limited to display of content through displays communicatively coupled to the primary client. The technology described herein expands display options to include displays associated with a user's other client devices that have a remote desktop application installed. For example, a user may access a virtual machine on a primary client but use the screen on a secondary client to view additional content provided by the virtual machine.

## Claims

1. A computerized system comprising:
one or more computer processors; and
computer memory storing computer-useable instructions that, when used by the one or more computer processors, cause the one or more computer processors to perform operations, the operations comprising:
establishing (302) a remote client session between a virtual machine and a primary client device that is coupled to a first display device, wherein the remote client session is associated with a first user account;
determining (304) that a secondary client device associated with the first user account is simultaneously connected to the virtual machine and is communicatively coupled to a second display device;
receiving (306), from a remote client application on the secondary client device, information about the second display device;
determining (308), at the virtual machine, that the second display device satisfies a criteria to be added to the remote client session;
providing (310), by the virtual machine through the first display device, a display selection interface that includes the second display device;
receiving (312) an indication that a user selection of the second client device occurred through the display selection interface; and
providing (314) graphics content from the remote client session to the secondary client device, wherein the graphics content is configured for display on the second display device based on the information about the second display device.

2. The system of claim 1, wherein the operations further comprise sending an inquiry to the secondary client device over a background connection between the secondary client device and the virtual machine, wherein the inquiry seeks information about the second display device.

3. The system of claim 1 or 2, wherein the remote client session between the virtual machine and the primary client device is carried by a graphics connection suitable for carrying the graphics content.

4. The system of any of claims 1-3, the operations further comprising, upon receiving the indication of the selection, transitioning the secondary client device from a background connection to a graphics connection.

5. The system of claim 4, wherein the background connection is an active lightweight connection that is not suitable for carrying the graphics content.

6. The system of any of claims 1-5, wherein the criteria to be added to the remote client session is the primary client device and the secondary client device being located within a threshold physical distance.

7. The system of any of claims 1-6, wherein the remote client application runs on the primary client device and the secondary client device.

8. The system of any of claims 1-7, wherein establishing the remote client session comprises:
communicating a request to complete a remote logon process; and
activating a client interface for the virtual machine.

9. One or more computer-storage media having computer-executable instructions embodied thereon that, when executed by a computing system having a processor and memory, cause the processor to perform operations, the operations comprising:
establishing (402) a remote client session between a virtual machine and a primary client device that is coupled to a first display device, wherein the remote client session is associated with a first user account;
determining (404) that a secondary client device associated with the first user account is simultaneously connected to the virtual machine and is communicatively coupled to a second display device;
receiving (406), from a remote client application on the secondary client device, information about the second display device including location information for the secondary client device;
determining (408), at the virtual machine, that the secondary client device is within a threshold location of the primary client device using the location information;
upon determining that the second display device is within the threshold location of the primary client device, providing (410), by the virtual machine through the first display device, a display selection interface that includes the second display device;
receiving (412) an indication that a user selection of the second display device occurred through the display selection interface; and
providing (414) graphics content from the remote client session to the secondary client device, wherein the graphics content is configured for display on the second display device.

10. The computer-storage media of claim 9, wherein the location information is a GPS location or a signal profile.

11. The computer-storage media of claim 10, wherein a connection to the secondary client device used to determine the second display is available is a background connection.

12. The computer-storage media of claim 10, wherein a connection to the secondary client device used to communicate the graphics content is a full connection.

13. The computer-storage media of any of claims 10-12, wherein the operations further comprises one of the following:
selecting an encoding technology based on the graphics content and the information about the second display device;
selecting a bit rate based the graphics content and the information about the second display device; and
selecting a dots per inch for the graphics content based on the information about the second display device.

14. A computer-implemented method, the method comprising:
receiving (502), at a remote desktop application running on a secondary client device, an inquiry from a virtual machine regarding a second display device associated with the secondary client device, wherein the inquiry is received over a first connection, and wherein the virtual machine is in a remote user session with a primary client device;
providing (504) a response to the inquiry including location information for the second display device and characteristics of the second display device;
receiving (506) graphics content from the virtual machine; and
providing (508) the graphics content to the second display device.

15. The method of claim 14, wherein the first connection is a background connection.
